(19) Europäisches Patentamt
European Patent Office
Office européen des brevets

(11) **EP 3 053 009 B1**

(12) **EUROPEAN PATENT SPECIFICATION**

(45) Date of publication and mention
of the grant of the patent:
**28.07.2021 Bulletin 2021/30**

(21) Application number: **14796314.4**

(22) Date of filing: **01.10.2014**

(51) Int Cl.:
*G06F 3/023* (2006.01)   *G06F 40/274* (2020.01)

(86) International application number:
**PCT/US2014/058502**

(87) International publication number:
**WO 2015/050910 (09.04.2015 Gazette 2015/14)**

(54) **EMOJI FOR TEXT PREDICTIONS**

EMOJI FÜR TEXTVORHERSAGEN

EMOJIS DESTINÉS À DES PRÉDICTIONS DE TEXTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2013 US 201314045461**

(43) Date of publication of application:
**10.08.2016 Bulletin 2016/32**

(73) Proprietor: **Microsoft Technology Licensing, LLC
Redmond, WA 98052 (US)**

(72) Inventors:
• **GRIEVES, Jason A.**
**Redmond, Washington 98052-6399 (US)**
• **ALMOG, Itai**
**Redmond, Washington 98052-6399 (US)**
• **BADGER, Eric Norman**
**Redmond, Washington 98052-6399 (US)**
• **COOK, James H.**
**Redmond, Washington 98052-6399 (US)**
• **GARCIA FIERRO, Manuel**
**Redmond, Washington 98052-6399 (US)**

(74) Representative: **CMS Cameron McKenna Nabarro
Olswang LLP
Cannon Place
78 Cannon Street
London EC4N 6AF (GB)**

(56) References cited:
**EP-A2- 1 475 689      US-A1- 2009 187 846
US-A1- 2010 131 447      US-A1- 2010 292 984
US-A1- 2013 159 919**

## Description

Background

Computing devices, such as mobile phones, portable and tablet computers, entertainment devices, handheld navigation devices, and the like are commonly implemented with on-screen keyboards (e.g., soft keyboards) that may be employed for text input and/or other interaction with the computing devices. When a user inputs text characters into a text box, edits text, or otherwise inputs characters using an on-screen keyboard or similar input device, a computing device may apply auto-correction to automatically correct misspellings and/or text prediction to predict and offer candidate words/phrases based on input characters. Today, users are increasingly using emoji in web pages, emails, text messages, and other communi cati ons. Emoji as used herein refer to ideograms, smileys, pictographs, emoticons, and other graphic characters/representations that are used in place of textual words or phrases.

In traditional approaches, auto-corrections and text predictions are produced using language models that are focused on words and phrase. The traditional language models do not include emoji or adapt to the use of emoji by users.

Accordingly, text prediction candidates provided using traditional techniques do not include emoji, which makes it more difficult for users that wish to use emoji to do so. Since existing techniques to browse and insert emoji for a message may be difficult and time consuming, users may choose not to use emoji at all in their messages. Additionally, incorrectly or inadvertently entered emoji are not recognized or corrected by auto-correction tools. US2013/0159919 discloses systems and methods for identifying and suggesting emoticons. US 2009/0187846 discloses an apparatus for providing a word input mechanism including a processing element. US2010/0131447 discloses a method in which the strings that make up a current thread in application are stored in a buffer in a mobile device.

Summary

There is provided a method according to independent claim 1. Further embodiments are provided by the dependent claims. The scope of the invention is defined by the appended claims.

**Brief Description of the Drawings**

The detailed description is described with reference to the accompanying figures. In the figures, the left-most digit(s) of a reference number identifies the figure in which the reference number first appears. The use of the same reference numbers in different instances in the description and the figures may indicate similar or identical items.

FIG. 1 illustrates an example operating environment in which aspects of emoji for text predictions can be implemented.
FIG. 2 illustrates an example user interface in accordance with one or more implementations.
FIG. 3 illustrates an example prediction scenario including emoji in accordance with one or more implementations.
FIG. 4A illustrates an example representation of a language model that supports emoji in accordance with one or more implementations.
FIG. 4B illustrates a representation of example relationships between multiple language model dictionaries in accordance with one or more implementations.
FIG. 5 depicts an example procedure in which text predictions including emoji are provided in accordance with one or more implementations.
FIG. 6 depicts an example procedure in which text predictions including emoji are generated and presented via a user interface in accordance with one or more implementations.
FIG. 7 depicts examples of user interfaces that incorporate emoji for text predictions.
FIG. 8 depicts an example scenario for interaction with an emoji offered as a prediction candidate.
FIG. 9 depicts an example scenario for interaction to switch back and forth between a word and corresponding emoji.
FIG. 10 depicts an example scenario for interaction to display emoji associated with prediction candidates on demand.
FIG. 11 depicts an example procedure in which text prediction candidates including emoji are selected using a weighted combination of scoring data from multiple dictionaries in accordance with one or more implementations.
FIG. 12 depicts example systems and devices that may be employed in one or more implementations of text predictions that include emoji.

**Detailed Description**

Overview

Traditionally, auto-corrections and text predictions are produced using language models that are focused on words and phrases and do not include emoji or adapt to the use of emoji by users. Accordingly, text prediction candidates and auto-correction tools provided using traditional techniques do not consider emoji, which makes it more difficult for users to use emoji in their communications.

Techniques to employ emoji for text predictions are described herein. In one or more implementations, entry of characters is detected during interaction with a device. Prediction candidates corresponding to the detected characters are generated according to a language model that is configured to consider emoji along with words and phrases. The language model may make use of a mapping table that maps a plurality of emoji to corresponding words and phrases. The mapping table enables a text prediction engine to offer the emoji as alternatives for matching words. In addition or alternatively, the text prediction engine may be configured to analyze emoji as words within the model and generate probabilities and candidate rankings for predictions that include both emoji and words. User -specific emoji use may also be learned by monitoring a user's typing activity to adapt predictions to the user's particular usage of emoji.

In the discussion that follows, a section titled "Operating Environment" describes an example environment and example user interfaces that may be employed in accordance with one or more implementations of adaptive language models for text predictions. A section titled "Language Model Details" describes example details of language models that support emoji. Following this, a section titled "Emoji for Text Prediction Details" describes example procedures and user interfaces in accordance with one or more implementations. Last, a section titled "Example System" is provided that describes example systems and devices that may be employed for one or more implementations of text predictions that include emoji.

Operating Environment

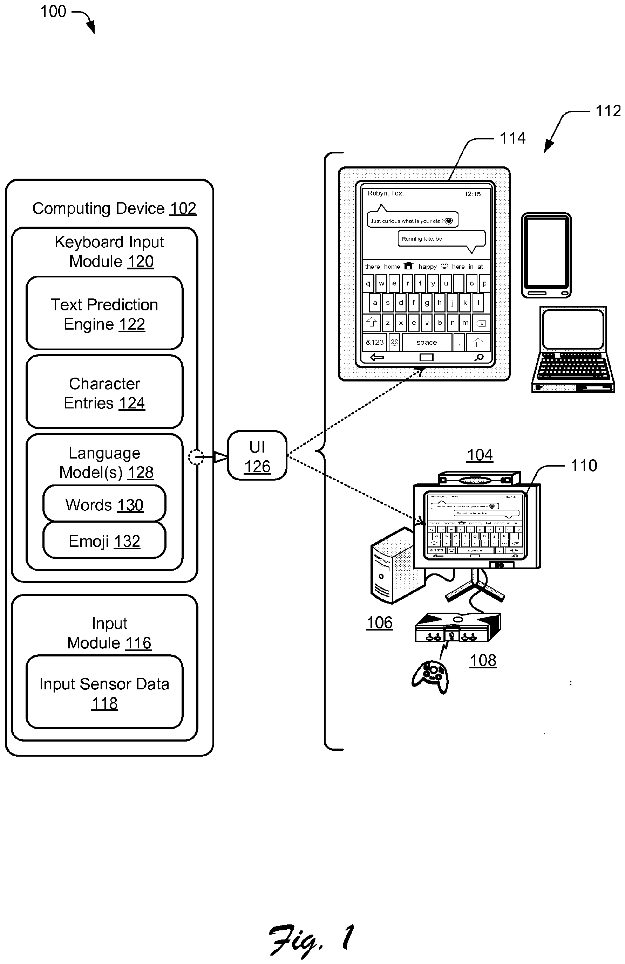

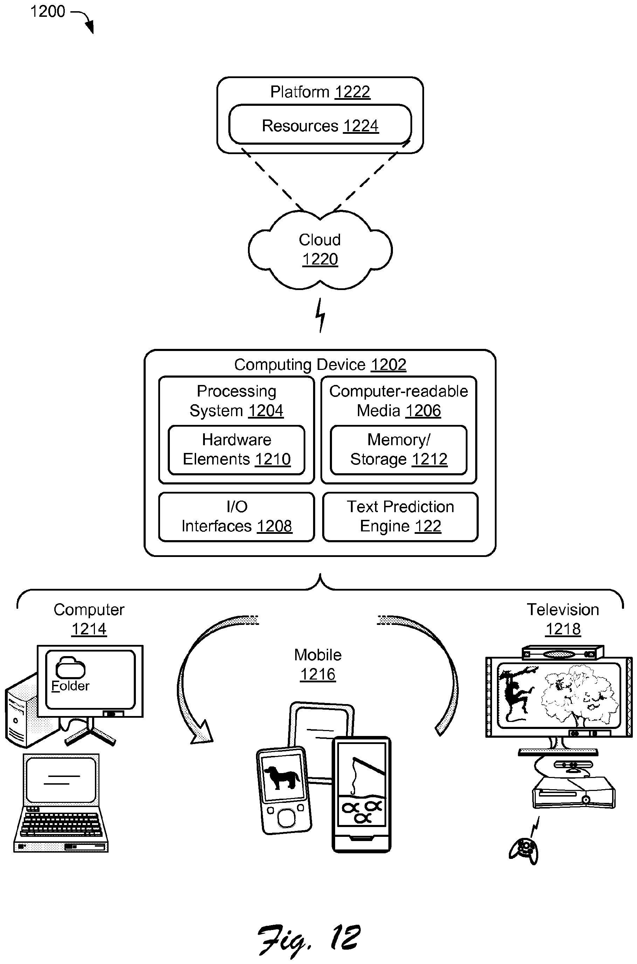

Fig. 1 illustrates an example system 100 in which embodiments of techniques to support emoji for text predictions can be implemented. The example system 100 includes a computing device 102, which may be any one or combination of a fixed or mobile device, in any form of a consumer, computer, portable, communication, navigation, media playback, entertainment, gaming, tablet, and/or electronic device. For example, the computing device 102 can be implemented as a television client device 104, a computer 106, and/or a gaming system 108 that is connected to a display device 110 to display media content. Alternatively, the computing device may be any type of portable computer, mobile phone, or portable device 112 that includes an integrated display 114. Any of the computing devices can be implemented with various components, such as one or more processors and memory devices, as well as with any combination of differing components as further described with reference to the example device shown in Fig. 12.

The integrated display 114 of a computing device 102, or the display device 110, may be a touch-screen display that is implemented to sense touch and gesture inputs, such as a user-initiated character, key, typed, or selector input in a user interface that is displayed on the touch-screen display. Alternatively or in addition, the examples of computing devices may include other various input mechanisms and devices, such as a keyboard, mouse, on-screen keyboard, remote control device, game controller, or any other type of user-initiated and/or user-selectable input device.

In implementations, the computing device 102 may include an input module 116 that detects and/or recognizes input sensor data 118 related to various different kinds of inputs such as on-screen keyboard character inputs, touch input and gestures, camera-based gestures, controller inputs, and other user-selected inputs. The input module 116 is representative of functionality to identify touch input and/or gestures and cause operations to be performed that correspond to the touch input and/or gestures. The input module 116, for instance, may be configured to recognize a gesture detected through interaction with a touch-screen display (e.g., using touch-screen functionality) by a user's hand. In addition or alternatively, the input module 116 may configured to recognize a gesture detected by a camera, such as waving of the user's hand, a grasping gesture, an arm position, or other defined gesture. Thus, touch inputs, gestures, and other input may also be recognized through input sensor data 118 as including attributes (e.g., movement, selection point, positions, velocity, orientation, and so on) that are usable to differentiate between different inputs recognized by the input module 116. This differentiation may then serve as a basis to identify a gesture from the inputs and consequently an operation that is to be performed based on identification of the gesture.

The computing device includes a keyboard input module 120 that can be implemented as computer-executable instructions, such as a software application or module that is executed by one or more processors to implement the various embodiments described herein. The keyboard input module 120 represent functionality to provide and manage an on-screen keyboard for keyboard interactions with the computing device 102. The keyboard input module 120 may be configured to cause representations of an on-screen keyboard to be selectively presented at different times, such as when a text input box, search control, or other text input control is activated. An on-screen keyboard may be provided for display on an external display, such as the display device 110 or on an integrated display such as the integrated display 114. In addition, note that a hardware keyboard/input device may also implement an adaptable "on-screen" keyboard having at least some soft keys suitable for the techniques described herein. For instance, a hardware keyboard provided as an external device or integrated with the computing device 102 may incorporate a display device, touch keys, and/or a touchscreen that may be employed to display a text prediction key as described herein. In this case, the keyboard input module 120 may be provided as a component of a device driver for the hardware keyboard/input device.

The keyboard input module 120 may include or otherwise make use of a text prediction engine 122 that represents functionality to process and interpret character entries 124 to form and offer predictions of candidate words corresponding to the character entries 124. For example, an on-screen keyboard may be selectively exposed in different interaction scenarios for input of text in a text entry box, password entry box, search control, data form, message thread, or other text input controls of a user interface 126, such as a form, HTML page, application UI, or document to facilitate user input of character entries 124 *(e.g.,* letters, numbers, and/or other alphanumeric characters, as well as emoji).

In general, the text prediction engine 122 ascertains one or more possible candidates that most closely match character entries 124 that are input. In this way, the text prediction engine 122 can facilitate text entry by providing one or more predictive words or emoji that are ascertained in response to character entries 124 that are input by a user. For example, the words/emoji predicted by the text prediction engine 122 may be employed to perform auto-correction of input text, present one or more words as candidates for selection by a user to complete, modify, or correct input text, automatically change touch hit areas for keys of the on-screen keyboard that correspond to predicted words, and so forth.

In accordance with techniques described herein, the text prediction engine 122 may be configured to include or make use of one or more language model(s) 128 as described above and below. Further, one or more language model(s) 128 may be configured to use both words 130 and emoji 132 for predictions and auto-corrections. In one approach, emoji 132 may be mapped to corresponding words and be exposed or offered as alternatives for matching words. In addition or alternatively, the text prediction engine 122 may make use of underlying language models that support emoji to make predictions that include emoji as candidates and/or that consider emoji in input strings when deriving predictions.

The language model 128 is also representative of functionality to adapt predictions made by the text prediction engine 122 on an individual basis to conform to different ways in which different users type. Accordingly, the language model 128 may monitor and collect data regarding text and/or emoji entries made by a user of a device. The monitoring and data collection may occur across the device in different interaction scenarios that may involve different applications, people (e.g., contacts or targets), text input mechanisms, and other contextual factors for the interaction. In one approach, the language model 128 is designed to make use of multiple language model dictionaries as sources of words, emoji, and corresponding scoring data (e.g., conditional probabilities, word counts, n-gram models, and so forth) that may be used to predict a next word or intended word based on character entries 124. Word and emoji probabilities and/or other scoring data from multiple dictionaries may be combined in various ways to rank possible candidates (words and emoji) one to another and select at least some of the candidates as being the most likely predictions for a given entry. As described in greater detail below, the multiple dictionaries applied for a given interaction scenario may be selected from a general population dictionary, a user-specific dictionary, and/or one or more interaction-specific dictionaries made available by the =language model 128. Details regarding these and other aspects of emoji for text predictions may be found in relation to the following figures.

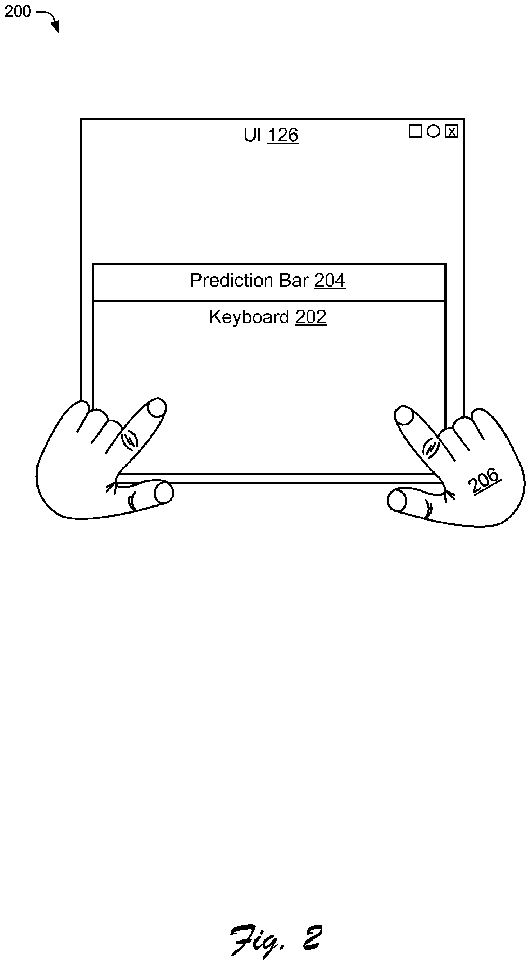

FIG. 2 illustrates a text prediction example in accordance with one or more embodiments, generally at 200. The depicted example can be implemented by the computing device 102 and the various components described with reference to Fig. 1. In particular, FIG. 2 depicts an example user interface 126 that may be output to facilitate interaction with a computing device 102. The user interface 126 is representative of any suitable interface that may be provided for the computing device, such as by an operating system or other application program. As depicted, the user interface 126 may include or otherwise be configured to make use of a keyboard 202. In this example, the keyboard 202 is an on-screen keyboard that may be rendered and/or output for display on a suitable display device. In some cases, the keyboard 202 may be incorporated as part of an application and appear within a corresponding user interface 126 to facilitate text entry, navigation, and other interaction with the application. In addition or alternatively, a representation of a keyboard 202 may be selectively exposed by a keyboard input module within a user interface 126 when text entry is appropriate. For example, the keyboard 202 may selectively appear when a user activates a text input control such as a search control, data form, or text input box. As mentioned, a suitably configured hardware keyboard may also be employed to provide input that causes text predictions to be determined and used to facilitate further text input.

In at least some embodiments, a keyboard input module 120 may cause representations of one or more suitable prediction candidates available from the text prediction engine 122 to be presented via the user interface. For example, a text prediction bar 204 or other suitable user interface control or instrumentality may be configured to present the representations of one or more suitable prediction candidates. For instance, representations of predicted text, words, or phrases may be displayed using an appropriate user interface instrumentality, such as the illustrated prediction bar 204, a drop-down box, a slide-out element, a pop-up box, toast message window, or a list box to name a few examples. The prediction candidates may be provided as selectable elements (e.g., keys, button, hit areas) that when selected cause input of corresponding text. The user may interact with the selectable elements to select one of the displayed candidates by way of touch input from a user's hand 206, or otherwise. In addition or alternatively, prediction candidates derived by a text prediction engine 122 may be used for auto-correction of input text, to expand underlying hit areas for one or more keys of the keyboard 202, or otherwise used to facilitate character entry and editing.

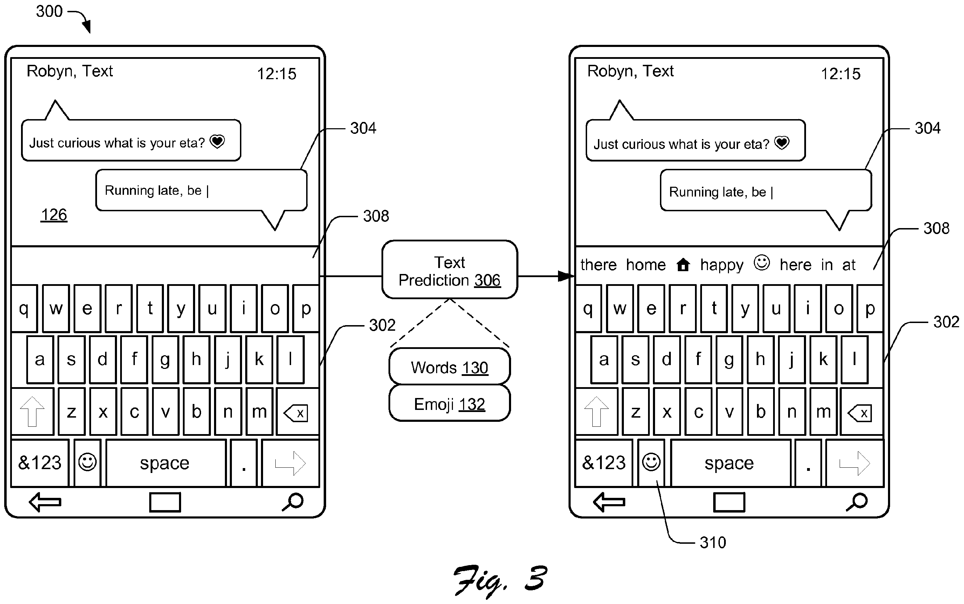

FIG. 3 illustrates presentation of predictions in accordance with an example interaction scenario, generally at 300. In particular, a user interface 126 configured for interaction with a search provider is depicted having an on-screen keyboard 302 for a mobile phone device. The interface includes a text input control 304 in the form of a text message input box. In the depicted example, a user has interacted with the text input control to input the characters "Running late be" that correspond to a partial phrase. In response to input of characters the text prediction engine 122 may operate to detect the characters determine one or more prediction candidates. When this text prediction 306 occurs, the keyboard input module 120 may detect that one or more prediction candidates are available and present the candidates via the user interface 126 or otherwise make use of the prediction candidates.

By way of example and not limitation, FIG. 3 depicts various prediction options for the input text "Running late be" as being output in a text prediction bar 308 that appears at the top of the keyboard. In accordance with techniques described herein, the prediction options include both words 130 and emoji 132. In particular, the options "there," "home," a house emoji, "happy," a smiley emoji, "here," "in," and "at," are shown as possible completions of the input text. In this arrangement, emoji predictions are interspersed with word prediction in the predictions bar. Other arrangements in which the emoji and words are presented serially, in different groups, and/or via different portions of a user interface or otherwise arranged within a user interface are also contemplated, examples of which are discussed below in this document.

In the example scenario, the options may be configured as selectable elements of the user interface operable to cause insertion of a corresponding prediction candidates presented via the text prediction bar 308 to modify the input/detected characters by replacement of the characters, completion of the characters, insertion of a prediction and so forth. Thus, if a user selects the "home" option by touch or otherwise, the input text in the search input box may automatically be completed to "Running late be home" in accordance with the selected option. Alternatively, if the user selects the house emoji option by touch or otherwise, the input text in the search input box may automatically be completed by inserting the house emoji after "Running late be" in accordance with the selected option.

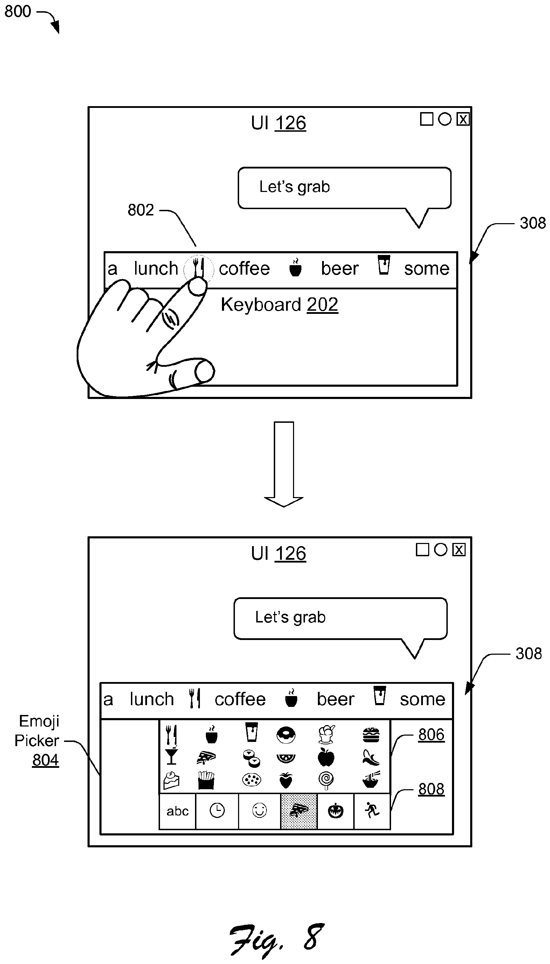

FIG. 3 further depicts an emoji key 310 of the on-screen keyboard. The emoji key 310 represents a dedicated key that may provide various functionality for interaction with emoji. For example, the emoji key 310 may be operable to expose an emoji picker to facilitate browsing and selection of emoji for a message/document from among a library of available emoji. Some example details of an emoji picker are discussed in relation to FIG. 8 below.

In addition or alternatively, the emoji key 310 may be configured to expose emoji candidates for a message or selected text string on-demand. In particular, pressing the emoji key during input of a message or following a selection of previously input text may express a user's intention to view and/or input emoji corresponding to the message. In one approach, a press and hold of a double tap, or other designated interaction with the emoji key 310 may cause corresponding emoji candidates to appear via the text prediction bar 308 in relation to a message/text that is selected or otherwise has focus. Multiple emoji candidates for a message may be presented. For example, if a message "I love you, kiss! " is input, then both a heart emoji for the word "love" and a face emoji with hearts for eyes for the word "kiss" may be presented responsive to operation of the emoji key 310 to express a user's intention to view and/or input available emoji. Various other examples are also contemplated.

Having considered an example environment, consider now a discussion of some details of language models that support emoji to further illustrate various aspects.

Language Model Details

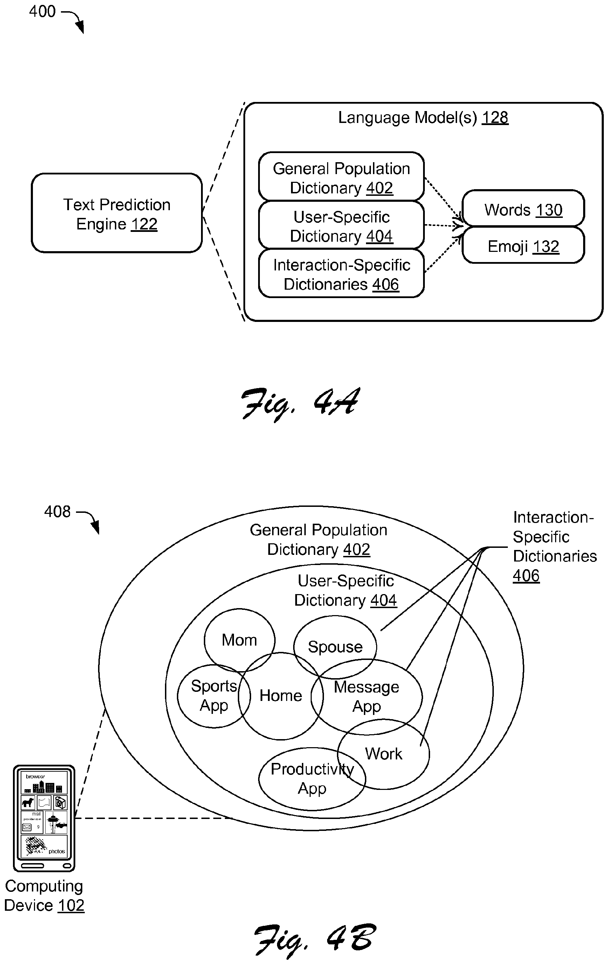

This section discusses details of techniques that employ language models for text predictions that may incorporate emoji with reference to the example representations of FIGS. 4A and 4B

FIG. 4A depicts generally at 400 a representation of a language model in accordance with one or more implementations. As shown, the language model 128 may include or make use of multiple individual language model dictionaries that are relied upon to make text predictions. In particular, the language model 128 in FIG. 4A is illustrated as incorporating a general population dictionary 402, a user-specific dictionary 404, and interaction-specific dictionaries 406. The language model 128 may be implemented by a text prediction engine 122 to adapt predictions to individual users and interactions. To do so, the language model 128 may be configured to monitor how users type, learn characteristics of a user's typing as the user types dynamically "on the fly", generate conditional probabilities based on input characters using the multiple dictionaries, and so forth. Moreover, one or more of the multiple individual language model dictionaries may be adapted to make use both words 130 and emoji 132 as represented in FIG. 4A. Emoji may be incorporated within the language models based upon a direct mapping of the emoji to words, emoji usage probabilities, user-specific usage of emoji, and so forth. The models may handle emoji in the same manner as words with respect to auto-corrections and/or predictions.

The language model dictionaries are generally configured to associate words and emoji with probabilities and/or other suitable scoring data (e.g., conditional probabilities, scores, word counts, n-gram model data, frequency data, and so forth) that may be used to rank possible candidate words one to another and select at least some of the candidates as being the most likely predictions for a given text entry. The language model 128 may track typing activity on user and/or interaction-specific bases to create and maintain corresponding dictionaries. Words, phrases, and emoji contained in the dictionaries may also be associated with various usage parameters indicative of the particular interaction scenarios (e.g., context) in which the words and phrases collected by the system are used. The usage parameters may be used to define different interaction scenarios, and filter or otherwise organize data to produce various corresponding language model dictionaries. Different combinations of one or more of the individual dictionaries may then be applied to different interaction scenarios accordingly.

FIG. 4B depicts generally at 408 a representation of example relationships between language model dictionaries in accordance with one or more implementations. In this example, the general population dictionary 402 represents a dictionary applicable to a general population that may be pre-defined and loaded on a computing device 102. The general population dictionary 402 reflects probabilities and/or scoring data for word, phrase, and emoji usage based on collective typing activities of many users. In an implementation, the general population dictionary 402 is built by a developer using large amounts of historical training data regarding users' typing and may be pre-loaded onto a device. The general population dictionary 402 is configured to be employed as a source for predictions across users and devices. In other words, the general population dictionary 402 may represent common usage for the population or community of users as a whole and is not tailored to particular individuals. The general population dictionary 402 may represent an entire collection of "known" words, phrases, and emoji for a selected language, e.g., common usage for English language users.

The user-specific dictionary 404 is derived based upon an individual's actual usage. The user-specific dictionary 404 reflects words, phrases, and emoji the user types through interaction with a device that the adaptive language model 128 is configured to learn and track. Existing words and emoji in the general population dictionary may be assigned to the user-specific dictionary as part of the user's lexicon. Words, phrases, and emoji that are not already contained in the general population dictionary may be automatically added in the user-specific dictionary 404 when used by a user. The user-specific dictionary may therefore encompass a subset of the general population dictionary 402 as represented in FIG. 4B. The user-specific dictionary 404 may represent conditional usage probabilities that are tailored to each individual based on the words, phrases, and emoji the individuals actually use (e.g., user-specific usage).

The interaction-specific dictionaries 406 represent interaction-specific usage for corresponding interaction scenarios. For instance, the words and emoji a person uses and the way in which they type changes in different circumstances. As mentioned, usage parameters may be used to define different interaction scenarios and to distinguish between the different interaction scenarios. Moreover, the language model 128 may be configured to maintain and manage corresponding interaction-specific language model dictionaries for multiple interaction scenarios. The interaction-specific dictionaries 406 may each represent a subset of the user-specific dictionary 404 as represented in FIG. 4B having words, phrases, emoji, and scoring data corresponding to a respective context for interaction with a computing device.

In particular, a variety of interaction scenarios may be defined using corresponding usage parameters that may be associated with a user's typing activity. For instance, usage parameters associated with words/phrases/emoji entered during an interaction may indicate one or more characteristics of the interaction, including but not limited to an application identity, a type of application, a person (e.g., a contact name or target recipient ID), a time of day, a date, a geographic location or place, a time of year or season, a setting, a person's age, favorite items, purchase history, relevant topics associated with input text, and/or a particular language used, to name a few examples. Interaction-specific dictionaries 408 may be formed that correspond to one or more of these example usage parameters as well as other usage parameters that describe the context of an interaction.

By way of example and not limitation, FIG. 4B represents example interaction-specific dictionaries that correspond to particular applications (message, productivity, and sports apps), particular locations (home, work), and particular people (mom, spouse). The way in which a user communicates may change for each of these different scenarios and the language model 128 keeps track of the differences for different interactions to adapt predictions accordingly. Some overlap between the example dictionaries in FIG. 4B is also represented as users may employ some of the same words, phrases, and emoji, across different settings.

In an implementation, dictionaries for different languages (e.g., English, German, Spanish, French, etc.) may be maintained and the language model 128 may be applied on a per-language basis to generate and offer candidates including emoji. Dictionaries for different languages may be arranged to incorporate probabilities/scoring data for both words and emoji on a per-language basis. Emoji usage may therefore be tracked for each language and emoji predictions may vary based on the currently active language. Dictionaries for different languages may be configured to reflect mapping of emoji to words and phrases per language based on collected usage data (e.g., global population dictionaries for each language) as well as user-specific adaptations and interaction-specific usage (e.g., language-specific usage of individual users).

In multi-lingual input scenarios in which a user may switch between different languages and/or may use multiple languages within a single message, predictions including emoji may be generated by combining probabilities/scoring data reflected by two or more dictionaries for different languages. In the multi-lingual scenario, lists of prediction candidates including words and emoji predicted for input text characters may be generated separately for each language by applying the interpolation techniques described herein. Then, a second interpolation may be employed to combine the individual probabilities from each of the language specific lists into a common list. In this manner, predictions of words and emoji presented to a user or otherwise used to facilitate text entry may reflect multiple languages by interpolating probabilities (or otherwise combining scoring data) from multiple dictionaries for different languages employed by the user.

As mentioned, emoji may be treated within the language model 128 as words. The dictionaries may therefore reflect conditional probabilities for emoji usage and/or other scoring data that may be used to rank emoji along with words one to another. For a given input scenario, the language model 128 derives top ranking emoji and words ordered by relevancy. The top ranking emoji and words may be presented together via a suitable user interface as discussed herein. The conditional probabilities and scoring data that are employed may be generated and tuned by collecting, analyzing, and reviewing word and emoji usage data for collective typing activities of a population of users, including usage data that is indicative of emoji usage intermingled with words or messages. As more and more data indicative of actual usage is collected, the conditional probabilities and scoring data may be tuned accordingly to reflect actual usage and produce more accurate predictions. The model may be further tuned by accounting for user-specific and interaction-specific usage as described herein. Tuning of the language model 128 model may occur across multiple dictionaries and/or on a per-language basis.

Additional details regarding these and other aspects are discussed in relation to the following example procedures and details.

Emoji for Text Prediction Details

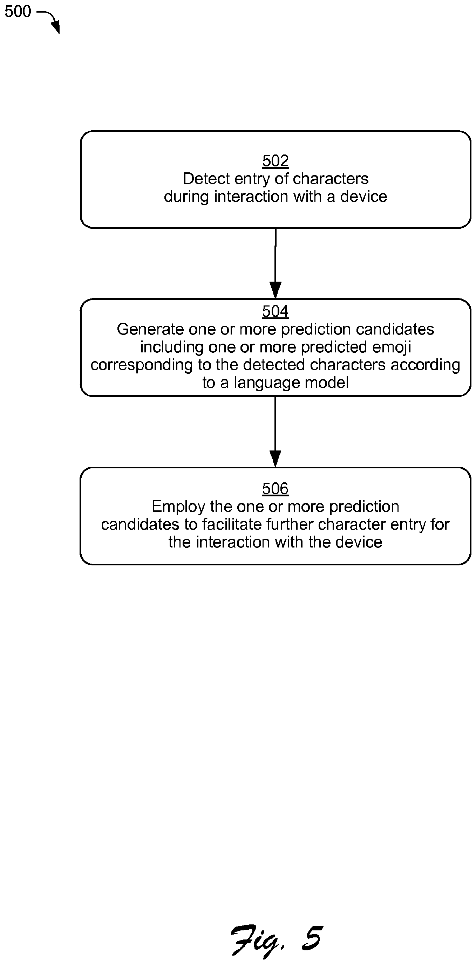

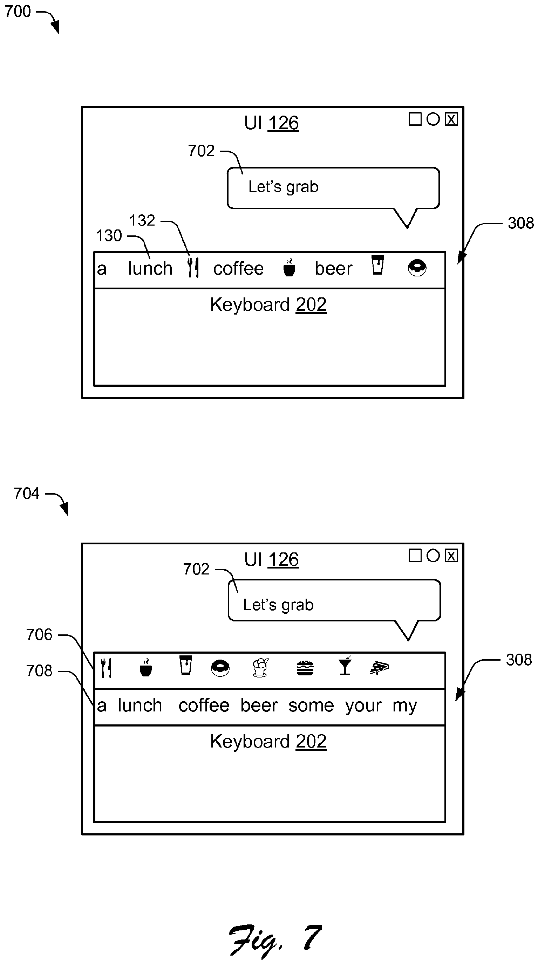

This section describes details of techniques for predictions that include emoji in relation to example procedures of FIGS. 5, 6, and 11 and example user interfaces and scenarios illustrated in FIGS. 7-10. In portions of the following discussion reference may be made to the example operating environment, components, language models, and examples described above in relation to FIGS 1-4. Aspects of each of the procedures described below may be implemented in hardware, firmware, or software, or a combination thereof. The procedures are shown as a set of blocks that specify operations performed by one or more devices and are not necessarily limited to the orders shown for performing the operations by the respective blocks. In at least some implementation the procedures may be performed by a suitably configured computing device, such as the example computing device 102 of Fig. 1 that includes or makes use of a text prediction engine 122 or comparable functionality.

FIG. 5 depicts a procedure 500 in which predictions are provided in accordance with one or more implementations. Entry of characters is detected during interaction with a device (block 502). For example, characters may be input by way of an on-screen keyboard, a hardware keyboard, voice commands, or other input mechanism. A mobile phone or other computing device 102 may be configured to detect and process input to represent entered characters within a user interface output via the device.

One or more prediction candidates including one or more predicted emoji corresponding to the detected characters are generated according to an adaptive language model (block 504) and the one or more prediction candidates are employed to facilitate further character entry for the interaction with the device (block 506). The predictions may be generated in any suitable way using various different techniques described above and below. For instance, a computing device may include a text prediction engine 122 that is configured to implement a language model 128 that supports emoji as described herein.

In operation, the language model 128 may be applied to particular input characters including words and emoji to determine corresponding predictions by using and/or combining one or more individual dictionaries. The language model 128 may establish a hierarchy of language model dictionaries at different levels of specificity (e.g., general population, user, interaction) that may be applied at different times and in different scenarios, such as the example dictionaries represented and described in relation to FIG. 4B. Alternatively, an individual dictionary may be used for multiple different scenarios.

The hierarchy of language model dictionaries as shown in FIG. 4B may be established for each individual user over time by monitoring and analyzing words and emoji that the user types and the context in which different words, emoji, and styles are employed by the user. Initially, a device may be supplied with a general population dictionary 402 that is relied upon for text predictions before sufficient data regarding a user's individual style is collected. As a user begins to interact with a device in various ways, the text prediction engine 122 begins to learn the user's individual style. Accordingly, a user-specific dictionary 404 may be built that reflects the user's actual usage and style. Further, usage parameters associated with the data regarding the user's individual style may be used to produce one or more interaction-specific dictionaries 406 that relate to particular interaction scenarios defined by the usage parameters. As more and more data regarding a user's individual style becomes available, the hierarchy of language model dictionaries may become increasingly more specific and tailored to the user's style. One or more of the dictionaries in the hierarchy of language model dictionaries may be applied to produce text predictions for subsequent interactions with a device.

In order to derive predictions, the language model 128 is configured to selectively use different combinations of dictionaries in the hierarchy for different interaction scenarios to identify candidates based on input text and to rank the candidates one to another. Generally, scores or values for ranking candidates may be computed by mathematically combining contributions from dictionaries associated with a given interaction scenario in a designated manner. Contributions from multiple dictionaries may be combined in various ways. In one or more embodiments, the language model 128 is configured to uses a ranking or scoring algorithm that computes a weighted combination of scoring data associated with words contained in the multiple dictionaries.

Accordingly, emoji may be incorporated with text predictions and auto-correction in various ways. In one example, emoji may be directly correlated to a word via a mapping table or other suitable data structure. Thus, when a user types a word and a corresponding emoji is available that correlates directly to the word/phrase (based on the mapping table), the emoji may be offered as a prediction. For example, if a user types "love," a heart emoji may be offered as a candidate to replace love or insert after love. An emoji may also be shown whenever a corresponding word is offered as a prediction. As noted below, if the word is still being formed and an emoji prediction is tapped, the selected emoji may replace the word.

Additionally, predicted emoji for partially typed words and/or next "words" may be determined based on preceding input and offered as candidates. In this case, a user may input a word, partial word, phrase, or partial phrase and one or more emoji may be predicted based on the input according to the language model described herein. For example, after typing "Meet me for a", the text input model may determine the words "beer" or "coffee" as a prediction for the phrase. In this case, a prediction bar or other user interface element may be configured to expose the text "beer" and "coffee" as well as corresponding emoji for beer and coffee. A user may then select the text or the emoji to insert the selection. In one approach, emoji corresponding to a predicted word may be shown immediately following the predicted word in a list of prediction candidates.

As mentioned, user-specific use of emoji may also be learned over time and added to a user-specific dictionary in the same manner in which words may be added to the user's personal lexicon. For example, if a user frequently users a particular combination of a phrase and a emoji, such as "Crazy, Crazy" followed by a scared face emoji, then this combination may be added to a user-specific dictionary for the user. Subsequently, if the user types or partially types "Crazy, Crazy" the system may automatically offer the scared face as a next word prediction.

Additionally, emoji may be exposed as candidates on demand in response to user interaction with a selected word or phrase that correlates to an emoji. This may occur in a prediction scenario as well as throughout a user experience. For instance, when a user taps a word that maps to an emoji (or otherwise interacts with the word in a designated manner to select the word), the corresponding emoji may be exposed as a replacement candidate for the word. In one approach, a user may toggle back and forth between words and emoji by tapping repeatedly. Further if the user taps on the emoji they may be offered the word equivalent. If more than one emoji are mapped to a word and the user taps on the emoji, the other emoji may be offered as replacement candidates in an ordered list based on ranking. The multiple emoji may be exposed simultaneously or one at a time in response to successive taps. Further examples and details of techniques to generate and use prediction candidates that include emoji are described below.

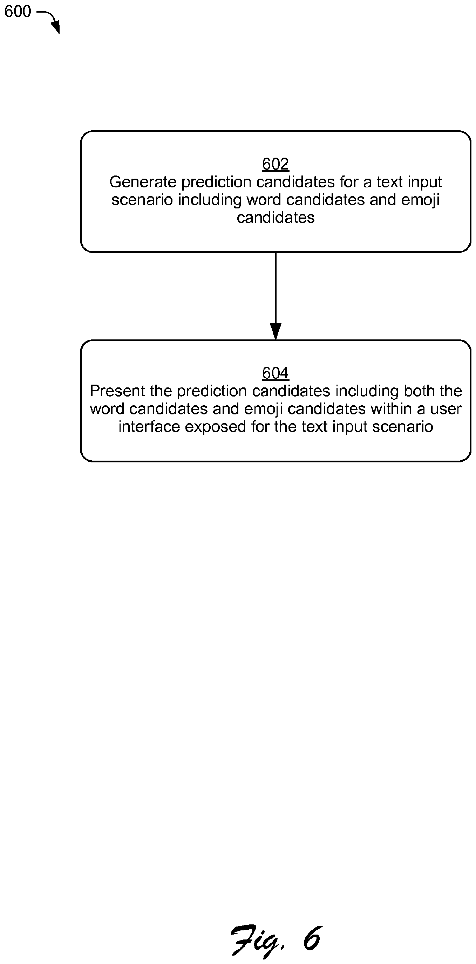

FIG. 6 depicts a procedure 600 in which predictions including emoji are generated and presented via a user interface in accordance with one or more implementations. Prediction candidates generated for a text input scenario including word candidates and emoji candidates (block 602). This may occur in any suitable way. In one approach, interaction scenarios are defined according to usage parameters as described previously. The text prediction engine 122 may be configured to recognize a current interaction as matching a defined interaction scenario based upon usage parameters. To do so, the text prediction engine 122 may collect or otherwise obtain contextual information regarding a current interaction by querying applications, interacting with an operating system, parsing message content or document content, examining metadata, and so forth. The text prediction engine 122 may establish one or more usage parameters for the interaction based upon the collected information. Then, the text prediction engine 122 may employ the language model 128 to identify one or more dictionaries to use for the interaction scenario that match the established usage parameters.

In particular, one or more predictions are computed for the interaction scenario using probabilities from the language model 128. For instance, the language model dictionaries may contain scoring data that is indicative of conditional probabilities for word and emoji usage. The conditional probabilities may be based on an n-gram word model that computes probabilities for a number of words "n" in a sequence that may be employed for predictions. For instance, a tri-gram (n=3) or bi-gram (n=2) word model may be implemented, although models having higher orders (n = 4, 5, ..., x) are also contemplated. As mentioned, emoji may be treated as words within the model and accordingly may be built into the conditional probabilities of the n-gram word model. Ranking scores may reflect a combination of probabilities and/or other suitable scoring data from any two or more of the individual dictionaries provided by the language model 128. Candidates including words and emoji may be ranked one to another based on scores derived from the language model 128.

As mentioned, various different and corresponding interaction-specific dictionaries are contemplated. Each interaction scenario may be related to one or more usage parameters that indicate contextual characteristics of the interaction. The interaction scenarios are generally defined according to contextual characteristics for which a user's typing style and behavior may change. A notion underlying the language model techniques described herein is that users type different words and typing style changes in different scenarios. Thus different dictionaries may be associated with and employed in connection with different interaction scenarios.

By way of example and not limitation. The different interaction scenarios may correlate to the application or type of application (e.g., application category) being used, individual people or contacts with which a user interacts, a geographic location (e.g., city, state, country) and/or setting (e.g., work, home, or school) of the device, topics established according to topic keywords (e.g., Super-Bowl, Hawaii, March Madness, etc.), timing-based parameters (e.g., time of day (day/night), time of year (spring/summer, fall, winter), month, holiday seasons), different languages (e.g., English, Spanish, Japanese, etc.) and/or combinations of the examples just described. Multiple language specific dictionaries may also be employed to produce multi-lingual text predictions. Accordingly, predictions for words and emoji may be derived in dependence upon the current interaction scenario and corresponding dictionaries, such that different predictions may be generated in response to the same input in different contexts.

The prediction candidates including both the word candidates and emoji candidates are presented within a user interface exposed for the text input scenario (block 604). Text prediction candidates that are generated according to the techniques described herein may be used in various ways including but not limited to being exposed as prediction candidates and being used to make auto-corrections for misspelled or incorrectly entered terms/emoji. Moreover, user interfaces 126 that make use of prediction candidates may be configured in various ways to take advantage of predictions that include emoji 132 and/or a direct mapping of emoji to words. In general, the emoji 132 may be treated as words 130 and may be shown along with word candidates in a user interface 126. This may include, exposing emoji as selectable items in a prediction bar 308 as part of a list of predictions. In various arrangements, emoji predictions may be interspersed with word predictions, emoji may be shown before or after word predictions, emoji and words may be grouped separately, and/or emoji and words may be provided in different distinct portions of the interfaces (e.g., separate prediction bars for emoji and word predictions). Additionally, user interfaces may be configured to support swapping back and forth between emoji and corresponding words by touch selection or other designated interaction. Some examples of these and other aspects of user interfaces that support emoji predictions are depicted and described in relation to FIGS. 7-10.

In particular, FIG. 7 shows generally at 700 an example user interface 126 that is configured to present predictions including words 130 and emoji 132 via an example prediction bar 308. In this example, a partial phrase "Let's grab" is represented as being input in text input control 702 in the form of a text message input box text. In response to this input, prediction candidates may be generated using corresponding dictionaries and scoring techniques described herein. The candidates may be ranked one to another and a number of closest matches may be presented via the prediction bar 308.

In this example, emoji predictions are shown as being interspersed in the prediction bar 308 with word candidates. Here, the emoji include emoji that are direct matches to predicted words such as the utensil emoji for lunch, the coffee emoji for coffee, and the beer emoji for beer. These emoji may be derived as direct matches via a mapping table. In an arrangement, direct matches for emoji may be shown in a user interface immediately following the corresponding word as represented in FIG. 7. Alternatively direct matches may be shown before corresponding words. Other arrangements in which direct matches of emoji are displayed in connection with corresponding words are also contemplated. Further, emoji may include one or more predicted emoji that are generated as candidates using selected dictionaries and scoring/ranking techniques in the same manner as word predictions. Emoji predicted in this manner may or may not directly match words that are predicted. By way of example, a donut emoji is shown in the prediction bar as an illustrative example of a predicted emoji that may be generated using the described techniques.

FIG. 7 depicts an additional example user interface 126 generally at 704 that is also configured to present predictions including words 130 and emoji 132 via an example prediction bar 308. In this case, the prediction bar 308 includes an emoji prediction portion 706 and a word prediction portion 708 as separate distinct portions in which corresponding predictions may be made. The emoji prediction portion 706 may present and enable selection of top ranking emoji candidates and likewise the word prediction portion 708 may present and enable selection of top ranking word candidates. The emoji prediction portion 706 and the word prediction portion 708 may be configured as separate prediction bars as represented in FIG. 7. Although shown as being adjacent to each other, the different portions may be exposed at different locations in the user interface. Both portions may be simultaneously displayed automatically during interaction scenarios for which predictions are generated. In addition or alternatively, a user may be able to selectively toggle display of either or both of the portions on or off by selection of a designated key, toggle element, or other control. In another arrangement, the emoji prediction portion 706 and a word prediction portion 708 may be alternatively displayable within the prediction bar 308 in response to user selection. For example, the word prediction portion 708 may be displayed and an emoji key of the keyboard, an icon, or other toggle control may be exposed to enable a user selection to switch to the emoji prediction portion 706. In response to user selection of the emoji toggle control, the emoji prediction portion 706 having emoji predictions may be rendered to replace the word prediction portion 708. In this way, a user may be able to toggle back and forth between an emoji prediction portion 706 and the word prediction portion 708 that are displayed as alternatives generally at the same location in the interface at different times.

FIG. 8 shows generally at 800 an example scenario in which an emoji displayed as a prediction may be employed to access additional emoji predictions and/or emoji options. In this case, the emoji are configured to facilitate navigation of a user interface 126 to browse and select emoji. The navigation may be based upon a predicted emoji that is presented in a user interface. A similar navigation may occur in response to interaction with an emoji that has already been input (e.g., in the text input control or otherwise) to edit/change the input emoji to a different emoji.

In the example scenario 800, a user selection of the utensil emoji is represented at 802. The selection may be made by tapping on the emoji, pressing and holding a finger on the emoji, or otherwise. In response to this selection, an emoji picker 804 may be exposed in the user interface 126. The emoji picker 804 may rendered to replace the keyboard 202 as shown in FIG. 8. In addition or alternatively, the emoji picker 804 and keyboard 202 may be displayed simultaneously in a horizontal or vertical split arrangement and/or the emoji picker 804 may be overlaid as a user interface element rendered on top of the keyboard representation. The emoji picker 804 may include an emoji navigation portion 806 to display and enable selection of a plurality of emoji. The emoji picker 804 may also include an emoji category bar 808 that enables selection of various emoji categories, such as time, smileys, food, holidays, and sports categories represented in FIG. 8. The emoji category bar 808 also includes a toggle switch label "abc" that may be selected to close out the emoji picker 804 and switch back to the keyboard 202.

In an implementation, the emoji navigation portion 806 is configured to show emoji that are determined as top ranking emoji candidates for the input scenarios by default. Further, an emoji category (not shown) corresponding to predicted emoji from the text prediction engine 122 may be included along with the other example categories. In addition or alternatively, the emoji picker 804 may be automatically navigated to a category corresponding to the emoji selected from the prediction bat to initiate interaction with the picker. Thus, a plurality of emoji that relate to the predicted emoji may be presented via the emoji picker responsive to interaction with the predicted emoji configured to access the emoji picker, such as pressing and holding of the predicted emoji.

In an arrangement in which an emoji category is employed, the emoji category may automatically be selected when the emoji picker 804 is accessed and exposed via an emoji prediction. A user may then be able to select one of the predicted emoji and/or navigate additional categories to choose an emoji from one of the other categories (e.g., an emoji option from the picker other than a predicted emoji). In the depicted example, however, the picker 804 is depicted as being navigated to a food category that corresponds to the utensil emoji selected at 802. In this case, the emoji navigation portion 806 may include predicted emoji in the category as well as other emoji options. Thus, the emoji picker 804 may be configured to facilitate selection of predicted emoji as well as on-demand emoji options in response to user selection of an emoji from a prediction bar, input control, or other presentation of emoji in the user interface 126.

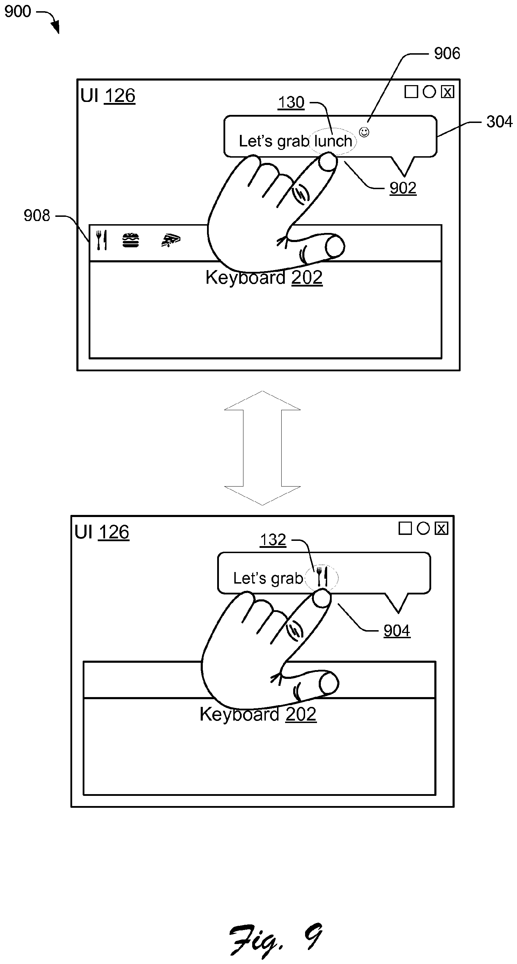

FIG. 9 shows generally at 900 an example scenario for switching between words and emoji. In particular, a word 130 such as "lunch" may be selected by a user as shown at 902. In this example, the word "lunch" is represented as having been previously input into a text input control of the interface 126. In response to this selection, the word 130 may be automatically replaced with a corresponding emoji 132, such as the utensil emoji shown in FIG. 9. Likewise, selection of an emoji as represented at 904 may cause the emoji to be automatically replaced with a corresponding word 130. Thus, a user may easily switch back and forth between words and corresponding emoji. The emoji switching functionality may be enabled based upon a mapping table that maps emoji to corresponding words and phrase. If a word is mapped to one than one emoji based on the mapping, successive selections may cause the different emoji options to be offered in succession and/or rendered as alternatives in the text input control. After each emoji option has been offered, the next selection may return back to the corresponding word. In this way, a user may be able to cycle through a list of emoji that are mapped to a corresponding word.

In an implementation, an indicator may be presented proximate to a word that maps to emoji to provide an indication to a user that emoji options are available for the word. In one approach, hovering of a finger near or above a word may cause an indicator to appear, such as the indicator 906 configured as a small smiley represented in FIG. 9. Emoji options for the word may then be accessed by selecting the word or selecting the indicator itself. Other indicators are also contemplated such as other graphics, a color change for the text, highlighting, or a gleam displayed in connection with the word, to name a few examples.

In addition or alternatively, selection of the word 130 at 902 may cause one or more corresponding emoji options to appear via a selection element in the user interface 126. For example, three possible emoji options for the selected word "lunch" are depicted as appearing at 908 in the example of Fig. 9. The options may appear via a prediction bar as shown or via another selection element exposed in the user interface. For example, the emoji options may be rendered via a slide out window that slides out from the text input control, an overlay box, a pop-up element, or otherwise. A user may then select between the various emoji options to replace the word "lunch" with the selected emoji.

Naturally, comparable techniques may be employed to switch back and forth between words and emoji in different applications, documents, input controls, user interfaces, and interaction scenarios. Thus, the emoji switching functionality as just described may be enabled across a device/platform and/or throughout the user experience.

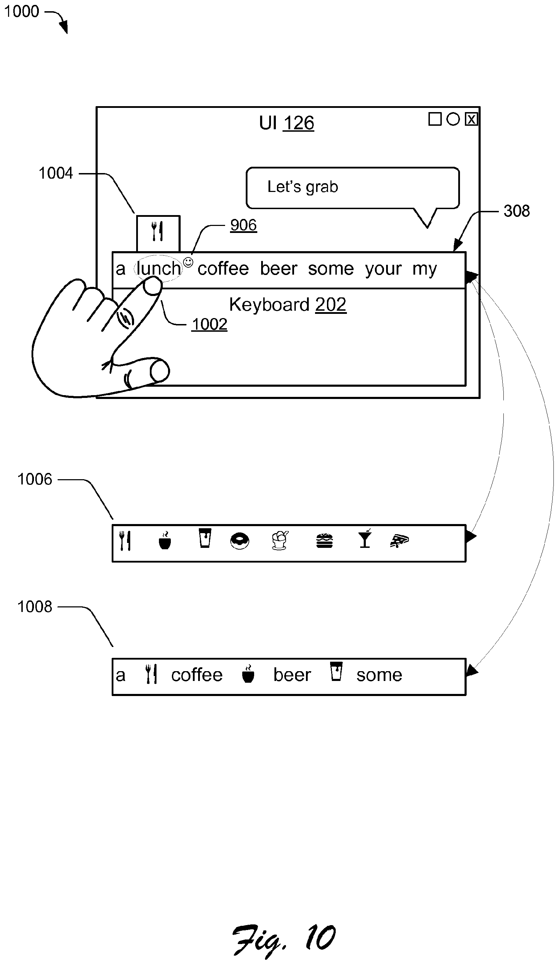

FIG 10 shows generally at 1000 an example scenario for on-demand selection of emoji based on input characters. Here, prediction candidates for the partial phrase "Let's Grab" are again illustrated as appearing via a prediction bar 308. The predictions in this example are words, however, emoji may also be included as discussed herein. In this example, a selection is represented at 1002 to cause on-demand presentation of emoji options for a selected word via the user interface. In an implementation the selection may be effectuated by pressing and holding the word with a finger. Other techniques to select the word may also be employed. The selection of the word "lunch" may cause a slide out window to appear at 1004 that includes one or more emoji options for lunch. In particular, the slide out window includes a utensil emoji that is mapped to lunch. If multiple emoji are mapped to lunch, the size of the slide-out may expand to accommodate display of multiple emoji or the emoji may be displayable in succession via the slide out responsive to successive taps. Other elements and techniques to display emoji on-demand are also contemplated. Availability of emoji corresponding to a predicted word may optionally be indicated by way of an indicator 906 as discussed in relation to FIG. 9.

Instead of launching a slide-out element as just described, the selection of the word at 1002 may cause replacement of the predictions in the prediction bar with one or more emoji predicted for the input scenario. For example, the word predictions appearing in the prediction bar 308 in FIG. 10 may be replaced with emoji predictions for the phrase "Let's grab" shown at 1006 responsive to the selection of the word at 1002. Alternatively, word predictions appearing in the prediction bar 308 in FIG. 10 may be replaced with interspersed words and emoji predictions shown at 1008 responsive to the selection of the word at 1002.

In another arrangement, selection of the prediction bar itself and/or items displayed in the prediction bar may enable a user to toggle back and forth between and/or cycle through different sets of predictions by successive selections. For example, a user may select a toggle operation by selecting and holding the prediction bar 308 or an item presented in the bar. This action may cause different arrangements of corresponding predictions to appear successively via the prediction bar 308 after each press and hold. For instance, the word predictions shown in FIG. 10 may be replaced with the interspersed arrangement at 1008 in response to a first press and hold. A subsequent press and hold may cause the interspersed arrangement to be replaced with the multiple emoji arrangement at 1006. An additional press and hold may return to the word predictions.

If a particular item is selected, the cycling between different arrangements may correlate to the selected item. Thus, if a press and hold occurs at the word "lunch" as shown in FIG. 10, emoji that match lunch may be arranged in the prediction bar 308. In other words, the utensil emoji and if applicable other emoji that are mapped to lunch may be arranged via the prediction bar 308 instead of via the slide-out shown at 1004. Additional press and hold selection may cause cycling through the other arrangement shown at 1006 and at 1008 and then back to the initial arrangement of text predictions. This approach enables a user to quickly access and interact with different prediction arrangements, at least some of which include emoji options. The user may then make selections via the arrangement to cause input of selected words or emoji.

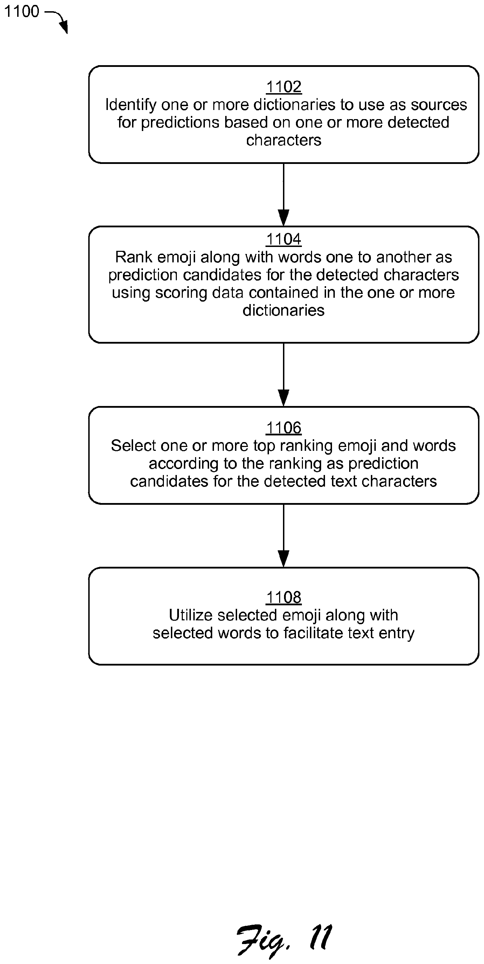

FIG. 11 depicts a procedure 1100 in which prediction candidates including emoji are selected using a weighted combination of scoring data from multiple dictionaries. One or more dictionaries are identified to use as sources for predictions based on one or more detected characters (block 1102). For example, dictionaries to apply for a given interaction may be selected according to a language model 128 that supports emoji as previously described. For instance, the text prediction engine 122 may identify dictionaries according to one or more usage parameters that match detected characters. If available, user-specific and/or interaction specific dictionaries may be identified and used by the text prediction engine 122 as components in generating predictions. If not, then the text prediction engine 122 may default to using the general population dictionary 402 by itself.

Emoji are ranked along with words one to another as prediction candidates for the detected characters using a weighted combination of scoring data associated with words contained in the one or more dictionaries (block 704). One or more top ranking emoji and words are selected according to the ranking as prediction candidates for the detected characters (Block 706). The ranking and selection of candidates may occur in various ways. Generally, scores for ranking prediction candidates may be computed by combining contributions from multiple dictionaries. For example, the text prediction engine 122 and language model 128 may be configured to implement a ranking or scoring algorithm that computes a weighted combination of scoring data. The weighted combination may be designed to interpolate predictions from a general population dictionary and at least one other dictionary. The other dictionary may be a user-specific dictionary, an interaction-specific dictionary, or even another general population dictionary for a different language.

As mentioned, language model dictionaries contain words and emoji associated with probabilities and/or other suitable scoring data for text predictions. A list of relevant prediction candidates may be generated from multiple dictionaries by interpolation of individual scores or probabilities derived from the multiple dictionaries for words identified as potential prediction candidates for the text characters. Thus, a combined or adapted score may be computed as a weighted average of the individual score components for two or more language model dictionaries. The combined scores may be used to rank candidates one to another. A designated number of top candidates may then be selected according to the ranking. For example, a list of the top ranking five or ten candidates may be generated to use for presentation of prediction candidates to a user. For auto-corrections, a most likely candidate that has the highest score may be selected and applied to perform an auto-correction. The predictions and auto-corrections consider emoji along with words.

Generally, interpolation of language model dictionaries as described herein may be represented by the following formula:

$$S_c = W_1 \, S_1 + W_2 \, S_2 \, \ldots \, W_n \, S_n$$

where $S_c$ is the combined score computed by summing scores $S_1$, $S_2$, ... $S_n$ from each individual dictionary that are weighted by respective interpolation weights $W1$, $W_2$,... $W_n$. The general formula above may be applied to interpolate from two or more dictionaries using various kinds of scoring data. By way of example and not limitation, the scoring data may include one or more of probabilities, counts, frequencies, and so forth. Individual components may be derived from the respective dictionaries. Pre-defined or dynamically generated weights may be assigned to the individual components. Then, the combined score is computed by summing the individual components weighted according to the assigned weights, respectively.

In an implementation, a linear interpolation may be employed to combine probabilities from two dictionaries. The interpolation of probabilities from two sources may be represented by the following formula:

$$P_c = W_1 \, P_1 + W_2 \, P_2$$

where $P_c$ is the combined probability computed by summing probabilities $P_1$ $P_2$ from each individual dictionary that are weighted by respective interpolation weights $W_1$, $W_2$. The linear interpolation approach may also be extended to more than two sources according to the general formula above.

The interpolation weights assigned to the components of the formula may be computed in various ways.

For example, weights may be determined empirically and assigned as individual weight parameters for the scoring algorithm. In some implementations, the weight parameters may be configurable by a user to change the influence of different dictionaries, selectively turn the adaptive language model on/off, or otherwise tune the computation.

In at least some implementations, the interpolation weights may be dependent upon on another. For example, $W_2$ may set to $1-W_1$, where $W_1$ is between 0 and 1. For the above example, this results in the following formula:

$$P_c = W_1 \, P_1 + (1-W_1) \, P_2$$

In addition or alternatively, weight parameters may be configured to adjust dynamically according to an interpolation function. The interpolation function is designed to adjust the weights automatically in order to change to the relative contributions of different components of the scores based upon one or more weighting factors. In the foregoing equation, this may occur by dynamically setting the value of $W_1$, which changes the weights associated with both $P_1$ and $P_2$.

By way of example, the interpolation function may be configured to account for factors such as the amount of user data available overall (e.g., total count), the count or frequency of individual words/emoji, how recently the words/ emoji are used, and so forth. Generally, the weights may adapt to increase the influence of the individual user's lexicon as more data is collected for the user and also increase the influence of individual words that are used more often. Additionally, weights for words and emoji that are used more recently may be adjusted to increase the influence of the recent words. The interpolation function may employ counts and timing data associated with a user's typing activity collectively across the device and/or for particular interaction scenarios to adjust weights accordingly. Thus, different weights may be employed depending upon the interaction scenario and corresponding dictionaries that are selected.

Accordingly, weights may vary based upon one or more of total count or other measure of the amount of user data collected, individual count for a candidate, and/or how recently a candidate was used. In one approach, the interpolation function may be configured to adapt the value of $W_1$ between a minimum value and maximum value, such as 0 and 0.5. The value may vary between the minimum and maximum according to a selected linear equation having a given slope.

The interpolation function may also set a threshold value for individual candidate counts. Below the threshold the value of $W_1$ may be set to zero. This forces a minimum number of instances (e.g., 2, 3, 10, etc.) of a candidate to occur before the word is considered for predictions. Using the threshold may prevent misspelled and mistaken input from being immediately used as part of the user specific lexicon.

To account for recency, the value of Wi may be adjusted by a multiplier that depends upon how recently a candidate was used. The value of the multiplier may be based on the most recent occurrence or a rolling average value for a designated number of most recent occurrences (e.g., last 10 or last 5). By way of example, a multiplier may be based upon how many days or months ago a particular candidate was last used. The multiplier may increase the contribution of probability/score for words that have been entered more recently. For example, a multiplier of 1.2 may be applied to words and emoji used in the preceding month and this value may decrease for each additional month down to a value of 1 for words last used a year or more ago. Naturally, a variety of other values and time frames may be employed to implement a scheme that accounts for recency. Other techniques to account for recency may also be employed including but not limited to adding a recency based factor into the interpolation equation, discounting the weights assigned to words according to a decay function as the time of last occurrence becomes longer, and so forth.

A mechanism to remove stale candidates after a designated period of time may also be implemented. This may be accomplished in various ways. In one approach, a periodic clean-up operation may identify candidates that have not been used for a designated time frame, such as one year or eighteen months. The identified words and emoji may be removed from the user's custom lexicon. Another approach is to set weights to zero after the designated time frame. Here, data may be preserved for the stale items assuming sufficient space exists to do so, but the zero weight prevents the system for using the stale words as candidates. If a user begins to use the items again, the words or emoji may be resurrected along with the pre-existing history. Naturally, the amount of available storage space may determine how much typing activity is preserved and when data for stale words is purged.

Once words and emoji are ranked and selected using the techniques just described, selected emoji are utilized along with selected words to facilitate text entry (Block 1108). For example, emoji may be provided as candidates for predictions via various user interfaces as discussed previously. Emoji predictions may be interspersed with word predictions or exposed via separate user interface elements. Emoji may also be used for autocorrections. Further, a mapping table that maps emoji to words may be employed to facilitate representations of emoji along with corresponding words and easy switching between words and emoji throughout the user experience.

Having described some example details and techniques related to emoji for text predictions, consider now an example system that can be utilized in one more implementation described herein.

## Example System and Device

Fig. 12 illustrates an example system 1200 that includes an example computing device 1202 that is representative of one or more computing systems and/or devices that may implement the various techniques described herein. The computing device 1202 may be, for example, a server of a service provider, a device associated with a client (e.g., a client device), an on-chip system, and/or any other suitable computing device or computing system.

The example computing device 1202 as illustrated includes a processing system 1204, one or more computer-readable media 1206, and one or more I/O interfaces 1208 that are communicatively coupled, one to another. Although not shown, the computing device 1202 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 1204 is representative of functionality to perform one or more operations using hardware. Accordingly, the processing system 1204 is illustrated as including hardware elements 1210 that may be configured as processors, functional blocks, and so forth. This may include implementation in hardware as an application specific integrated circuit or other logic device formed using one or more semiconductors. The hardware elements 1210 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 1206 is illustrated as including memory/storage 1212. The memory/storage 1212 represents memory/storage capacity associated with one or more computer-readable media. The memory/storage 1212 may include volatile media (such as random access memory (RAM)) and/or nonvolatile media (such as read only memory (ROM), Flash memory, optical disks, magnetic disks, and so forth). The memory/storage 1212 may include fixed media (e.g., RAM, ROM, a fixed hard drive, and so on) as well as removable media (e.g., Flash memory, a removable hard drive, an optical disc, and so forth). The computer-readable media 1206 may be configured in a variety of other ways as further described below.

Input/output interface(s) 1208 are representative of functionality to allow a user to enter commands and information to computing device 1202, and also allow information to be presented to the user and/or other components or devices using various input/output devices. Examples of input devices include a keyboard, a cursor control device (e.g., a mouse), a microphone for voice operations, a scanner, touch functionality (e.g., capacitive or other sensors that are configured to detect physical touch), a camera (e.g., which may employ visible or non-visible wavelengths such as infrared frequencies to detect movement that does not involve touch as gestures), and so forth. Examples of output devices include a display device (e.g., a monitor or projector), speakers, a printer, tactile-response device, and so forth. The computing device 1202 may further include various components to enable wired and wireless communications including for example a network interface card for network communication and/or various antennas to support wireless and/or mobile communications. A variety of different types of antennas suitable are contemplated including but not limited to one or more Wi-Fi antennas, global navigation satellite system (GNSS) or global positioning system (GPS) antennas, cellular antennas, Near Field Communication (NFC) 214 antennas, Bluetooth antennas, and/or so forth. Thus, the computing device 1202 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 1202. By way of example, and not limitation, computer-readable media may include "computer-readable storage media" and "communication media."

"Computer-readable storage media" refers to media and/or devices that enable storage of information in contrast to mere signal transmission, carrier waves, or signals per se. Thus, computer-readable storage media does not include signal bearing media or signals per se. The computer-readable storage media includes hardware such as volatile and nonvolatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Communication media" refers to signal-bearing media configured to transmit instructions to the hardware of the computing device 1202, such as via a network. Communication media typically may embody computer readable instructions, data structures, program modules, or other data in a modulated data signal, such as carrier waves, data signals, or other transport mechanism. Communication media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 1210 and computer-readable media 1206 are representative of instructions, modules, programmable device logic and/or fixed device logic implemented in a hardware form that may be employed in some embodiments to implement at least some aspects of the techniques described herein. Hardware elements may include components of an integrated circuit or on-chip system, an application-specific integrated circuit (ASIC), a field-programmable gate array (FPGA), a complex programmable logic device (CPLD), and other implementations in silicon or other hardware devices. In this context, a hardware element may operate as a processing device that performs program tasks defined by instructions, modules, and/or logic embodied by the hardware element as well as a hardware device utilized to store instructions for execution, e.g., the computer-readable storage media described previously.

Combinations of the foregoing may also be employed to implement various techniques and modules described herein. Accordingly, software, hardware, or program modules including text prediction engine 122, adaptive language model 128, and other program modules may be implemented as one or more instructions and/or logic embodied on some form of computer-readable storage media and/or by one or more hardware elements 1210. The computing device 1202 may be configured to implement particular instructions and/or functions corresponding to the software and/or hardware modules. Accordingly, implementation of modules as a module that is executable by the computing device 1202 as software may be achieved at least partially in hardware, e.g., through use of computer-readable storage media and/or hardware elements 1210 of the processing system. The instructions and/or functions may be executable/operable by one or more articles of manufacture (for example, one or more computing devices 1202 and/or processing systems 1204) to implement techniques, modules, and examples described herein.

As further illustrated in Fig. 12, the example system 1200 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 1200, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link.

In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the computing device 1202 may assume a variety of different configurations, such as for computer 1214, mobile 1216, and television 1218 uses. Each of these configurations includes devices that may have generally different constructs and capabilities, and thus the computing device 1202 may be configured according to one or more of the different device classes. For instance, the computing device 1202 may be implemented as the computer 1214 class of a device that includes a personal computer, desktop computer, a multi-screen computer, laptop computer, netbook, and so on.

The computing device 1202 may also be implemented as the mobile 1216 class of device that includes mobile devices, such as a mobile phone, portable music player, portable gaming device, a tablet computer, a multi-screen computer, and so on. The computing device 1202 may also be implemented as the television 1218 class of device that includes devices having or connected to generally larger screens in casual viewing environments. These devices include televisions, set-top boxes, gaming consoles, and so on.

The techniques described herein may be supported by these various configurations of the computing device 1202 and are not limited to the specific examples of the techniques described herein. This is illustrated through inclusion of the text prediction engine 122 on the computing device 1202. The functionality of the text prediction engine 122 and other modules may also be implemented all or in part through use of a distributed system, such as over a "cloud" 1220 via a platform 1222 as described below.

The cloud 1220 includes and/or is representative of a platform 1222 for resources 1224. The platform 1222 abstracts underlying functionality of hardware (e.g., servers) and software resources of the cloud 1220. The resources 1224 may include applications and/or data that can be utilized while computer processing is executed on servers that are remote from the computing device 1202. Resources 1224 can also include services provided over the Internet and/or through a subscriber network, such as a cellular or Wi-Fi network.

The platform 1222 may abstract resources and functions to connect the computing device 1202 with other computing devices. The platform 1222 may also serve to abstract scaling of resources to provide a corresponding level of scale to encountered demand for the resources 1224 that are implemented via the platform 1222. Accordingly, in an interconnected device embodiment, implementation of functionality described herein may be distributed throughout the system 1200. For example, the functionality may be implemented in part on the computing device 1202 as well as via the platform 1222 that abstracts the functionality of the cloud 1220.

Conclusion

Although the techniques in the forgoing description has been described in language specific to structural features and/or methodological acts, it is to be understood that the subject matter of the appended claims is not necessarily limited to the specific features or acts described. Rather, the specific features and acts are disclosed as example forms of implementing the claimed subject matter. The scope of the invention is defined by the appended claims.

**Claims**

1. A method, comprising:

    detecting (502) entry of characters during interaction with a computing device (102);
    generating (504) prediction candidates including one or more predicted emoji corresponding to the detected characters according to a language model (128), wherein generating (504) the prediction candidates comprises identifying one or more emoji as prediction candidates that correspond to predicted words based upon a mapping table for the language model (128) that directly maps emoji to words;

displaying each predicted word with one or more corresponding predicted emoji as alternatives for selection;

employing (506) the prediction candidates to facilitate further character entry for the interaction with the device (102); and

enabling switching between each predicted word with the one or more predicted emoji during interaction with the device based upon the mapping table.

2. A method as recited in claim 1, wherein the language model (128) is configured to adapt predictions made by a text prediction engine (122) to typing styles of users on an individual basis including user-specific emoji usage.

3. A method as recited in claim 1, wherein the language model (128) is designed to make use of multiple language model dictionaries (402, 404, 406) as sources of words, emoji, and corresponding scoring data, the scoring data being tuned based on collection and analysis of word and emoji usage data for collective typing activities of a population of users.

4. A method as recited in claim 1, wherein generating (504) the prediction candidates comprises computing a weighted combination of scoring data associated with words and emoji contained in multiple dictionaries (402, 404, 406) associated with the language model (128) to compute scores for the prediction candidates.

5. A method as recited in claim 4, wherein generating (504) the one or more text prediction candidates further comprises ranking the prediction candidates including words and emoji one to another based on the computed scores.

6. A method as recited in claim 1, further comprising collecting data regarding usage of emoji on a user-specific basis to create a user-specific dictionary (404) for the language model (128) that reflects usage of emoji.

7. A method as recited in claim 1, the enabling switching between each predicted word with the one or more predicted emoji during interaction with the device including:

switching between a particular word and a corresponding emoji responsive to a selection of the particular word to cause the switching; and switching between a particular emoji and a corresponding word responsive to a selection of the particular emoji to cause the switching.

8. A method as recited in claim 1, wherein employing (506) the prediction candidates comprises receiving a selection by a user to automatically insert a selected prediction candidate after the detected characters.

9. A method as recited in claim 1, wherein employing (506) the prediction candidates comprises presenting representations of one or more prediction candidates for selection by a user via a prediction bar (204) exposed in connection with an on-screen keyboard (202) of the device (102).

10. A method as recited in claim 9, wherein the predicted emojis and predicted words are interspersed in the prediction bar.

**Patentansprüche**

1. Verfahren, umfassend:

Erkennen (502) einer Eingabe von Zeichen während Interaktion mit einer Rechenvorrichtung (102);
Erzeugen (504) von Vorhersagekandidaten einschließlich eines oder mehrerer vorhergesagter Emojis, welche den erkannten Zeichen gemäß einem Sprachmodell (128) entsprechen, wobei Erzeugen (504) der Vorhersagekandidaten Identifizieren eines oder mehrerer Emojis als Vorhersagekandidaten umfasst, welche vorhergesagten Wörtern auf Basis einer Zuordnungstabelle für das Sprachmodell (128) entsprechen, welche Emojis direkt Wörtern zuordnet;
Anzeigen jedes vorhergesagten Wortes mit einem oder mehreren entsprechenden vorhergesagten Emojis als Alternativen zur Auswahl;
Verwenden (506) der Vorhersagekandidaten zum Erleichtern von weiterer Eingabe von Zeichen für die Interaktion mit der Vorrichtung (102); und
Aktivieren von Umschalten zwischen dem jeweiligen vorhergesagten Wort und dem einen oder den mehreren vorhergesagten Emojis während Interaktion mit der Vorrichtung auf Basis der Zuordnungstabelle.

2. Verfahren nach Anspruch 1, wobei das Sprachmodell (128) konfiguriert ist, um von einer Textvorhersage-Engine (122) gemachte Vorhersagen an Eingabemuster von Benutzern auf einer individuellen Basis einschließlich benutzerspezifischer Benutzung von Emojis zu adaptieren.

3. Verfahren nach Anspruch 1, wobei das Sprachmodell (128) konzipiert ist, mehrere Sprachmodell-Wörterbücher (402, 404, 406) als Quellen von Wörtern, Emojis und entsprechende Bewertungsdaten zu benutzen, wobei die Bewertungsdaten auf Basis von Sammlung und Analyse von Verwendungsdaten von Wörtern und Emojis für kollektive Eingabeaktivitäten einer Population von Benutzern eingestellt werden.

4. Verfahren nach Anspruch 1, wobei Erzeugen (504) der Vorhersagekandidaten Berechnen einer gewichteten Kombination von Bewertungsdaten umfasst, welche mit Wörtern und Emojis verknüpft sind, welche in mehreren Wörterbüchern (402, 404, 406) enthalten sind, welche mit dem Sprachmodell (128) verknüpft sind, um Bewertungen für die Vorhersagekandidaten zu berechnen.

5. Verfahren nach Anspruch 4, wobei Erzeugen (504) des einen oder der mehreren Textvorhersagekandidaten weiter Reihen der Vorhersagekandidaten einschließlich Wörtern und Emojis zueinander auf Basis der berechneten Bewertung umfasst.

6. Verfahren nach Anspruch 1, weiter Sammeln von Daten hinsichtlich Benutzung von Emojis auf einer benutzerspezifischen Basis umfassend, um ein benutzerspezifisches Wörterbuch (404) für das Sprachmodell (128) zu erstellen, welches Benutzung von Emojis widerspiegelt.

7. Verfahren nach Anspruch 1, wobei das Aktivieren von Umschalten zwischen dem jeweiligen vorhergesagten Wort und dem einen oder den mehreren vorhergesagten Emojis während Interaktion mit der Vorrichtung beinhaltet:

   Umschalten zwischen einem speziellen Wort und einem entsprechenden Emoji als Reaktion auf eine Auswahl des speziellen Worts, um das Umschalten zu verursachen; und
   Umschalten zwischen einem speziellen Emoji und einem entsprechenden Wort als Reaktion auf eine Auswahl des speziellen Emojis, um das Umschalten zu verursachen.

8. Verfahren nach Anspruch 1, wobei Verwenden (506) der Vorhersagekandidaten Empfangen einer Auswahl durch einen Benutzer umfasst, um einen ausgewählten Vorhersagekandidaten nach dem erkannten Zeichen automatisch einzusetzen.

9. Verfahren nach Anspruch 1, wobei Verwenden (506) der Vorhersagekandidaten Vorschlagen von Darstellungen eines oder mehrerer Vorhersagekandidaten zur Auswahl durch einen Benutzer über eine Vorhersageleiste (204) umfasst, welche in Verbindung mit einer Bildschirmtastatur (202) der Vorrichtung (102) angezeigt wird.

10. Verfahren nach Anspruch 9, wobei die vorhergesagten Emojis und vorhergesagten Wörter in der Vorhersageleiste vermischt werden.

## Revendications

1. Procédé comprenant :

   la détection (502) d'une entrée de caractères durant une interaction avec un dispositif de calcul (102) ;
   la génération (504) de candidats de prédiction incluant un ou plusieurs émojis prédits correspondant aux caractères détectés en fonction d'un modèle de langue (128), dans lequel la génération (504) des candidats de prédiction comprend l'identification d'un ou plusieurs émojis comme des candidats de prédiction qui correspondent à des mots prédits sur la base d'une table de mappage pour le modèle de langue (128) qui mappe directement des émojis à des mots ;
   l'affichage de chaque mot prédit avec un ou plusieurs émojis prédits correspondants comme des alternatives pour la sélection ;
   l'emploi (506) des candidats de prédiction pour faciliter une autre entrée de caractère pour l'interaction avec le dispositif (102) ; et
   l'autorisation d'une commutation entre chaque mot prédit avec les un ou plusieurs émojis prédits durant une interaction avec le dispositif sur la base de la table de mappage.

2. Procédé selon la revendication 1, dans lequel le modèle de langue (128) est configuré pour adapter des prédictions effectuées par un moteur de prédiction de texte (122) à des styles de saisie d'utilisateurs sur une base individuelle incluant l'utilisation d'émojis spécifiques à l'utilisateur.

3. Procédé selon la revendication 1, dans lequel le modèle de langue (128) est conçu pour utiliser de multiples dictionnaires de modèle de langue (402, 404, 406) comme des sources de mots, d'émojis et de données de notation correspondantes, les données de notation étant réglées sur la base d'une collecte et d'une analyse de données d'utilisation de mots et d'émojis pour des activités de saisie collectives d'une population d'utilisateurs.

4. Procédé selon la revendication 1, dans lequel la génération (504) des candidats de prédiction comprend le calcul d'une combinaison pondérée de données de notation associées à des mots et des émojis contenus dans de multiples dictionnaires (402, 404, 406) associés au modèle de langue (128) pour calculer des notes pour les candidats de prédiction.

5. Procédé selon la revendication 4, dans lequel la génération (504) des un ou plusieurs candidats de prédiction de texte comprend en outre le classement des candidats de prédiction incluant des mots et des émojis l'un par rapport à l'autre sur la base des notes calculées.

6. Procédé selon la revendication 1, comprenant en outre la collecte de données concernant une utilisation d'émojis sur une base spécifique à l'utilisateur pour créer un dictionnaire spécifique à l'utilisateur (404) pour le modèle de langue (128) qui reflète une utilisation d'émojis.

7. Procédé selon la revendication 1, l'autorisation d'une commutation entre chaque mot prédit avec les un ou plusieurs émojis prédits durant une interaction avec le dispositif incluant :

   la commutation entre un mot particulier et un émoji correspondant en réponse à une sélection du mot particulier pour provoquer la commutation ; et
   la commutation entre un émoji particulier et un mot correspondant en réponse à une sélection de l'émoji particulier pour provoquer la commutation.

8. Procédé selon la revendication 1, dans lequel l'emploi (506) des candidats de prédiction comprend la réception d'une sélection par un utilisateur pour insérer automatiquement un candidat de prédiction sélectionné après les caractères détectés.

9. Procédé selon la revendication 1, dans lequel l'emploi (506) des candidats de prédiction comprend la présentation de représentations d'un ou plusieurs candidats de prédiction pour une sélection par un utilisateur via une barre de prédiction (204) exposée en relation avec un clavier sur écran (202) du dispositif (102).

10. Procédé selon la revendication 9, dans lequel les émojis prédits et les mots prédits sont intercalés dans la barre de prédiction.

**Fig. 1**

200

UI 126  □ ○ ☒

Prediction Bar 204

Keyboard 202

206

*Fig. 2*

Fig. 3

400

Language Model(s) 128

General Population
Dictionary 402

Text Prediction
Engine 122

User-Specific
Dictionary 404

Words 130

Emoji 132

Interaction-Specific
Dictionaries 406

*Fig. 4A*

408

General Population
Dictionary 402

Interaction-
Specific
Dictionaries
406

User-Specific
Dictionary 404

Mom

Spouse

Sports
App

Home

Message
App

Work

Productivity
App

Computing
Device 102

browser

mail
provider.com

photos

*Fig. 4B*

500

**502**
Detect entry of characters
during interaction with a device

**504**
Generate one or more prediction candidates
including one or more predicted emoji
corresponding to the detected characters according
to a language model

**506**
Employ the one or more prediction
candidates to facilitate further character entry for
the interaction with the device

*Fig. 5*

600

<div style="text-align:center">

**602**
Generate prediction candidates for a text input
scenario including word candidates and emoji
candidates

↓

**604**
Present the prediction candidates including both the
word candidates and emoji candidates within a user
interface exposed for the text input scenario

</div>

*Fig. 6*

*Fig. 7*

*Fig. 8*

*Fig. 9*

Fig. 10

1100

```
┌─────────────────────────────────────┐
│              1102                    │
│ Identify one or more dictionaries to │
│ use as sources for predictions based │
│ on one or more detected characters   │
└─────────────────────────────────────┘
                  │
                  ▼
┌─────────────────────────────────────┐
│              1104                    │
│ Rank emoji along with words one to   │
│ another as prediction candidates for │
│ the detected characters using scoring│
│ data contained in the one or more    │
│ dictionaries                         │
└─────────────────────────────────────┘
                  │
                  ▼
┌─────────────────────────────────────┐
│              1106                    │
│ Select one or more top ranking emoji │
│ and words according to the ranking as│
│ prediction candidates for the        │
│ detected text characters             │
└─────────────────────────────────────┘
                  │
                  ▼
┌─────────────────────────────────────┐
│              1108                    │
│ Utilize selected emoji along with    │
│ selected words to facilitate text    │
│ entry                                │
└─────────────────────────────────────┘
```

*Fig. 11*

1200

Platform 1222

Resources 1224

Cloud
1220

Computing Device 1202

Processing
System 1204

Hardware
Elements 1210

Computer-readable
Media 1206

Memory/
Storage 1212

I/O
Interfaces 1208

Text Prediction
Engine 122

Computer
1214

Folder

Mobile
1216

Television
1218

*Fig. 12*

**EP 3 053 009 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130159919 A
- US 20090187846 A
- US 20100131447 A